# EUROPEAN PATENT APPLICATION

(11) **EP 1 267 242 A2**
(43) Date of publication of application: **18.12.2002**
(21) Application number: 02009829.9
(22) Date of filing: 02.05.2002
(51) Int. Cl.: G06F 1/00

(54) **User verification service in a multimedia-capable network**

(30) Priority: 31.05.2001 US 871510
(71) Applicant: Alcatel S.A., 75008 Paris (FR)
(72) Inventor: Mani, Babu V., Plano, TX 75025 (US)
(74) Representative: Dreiss, Fuhlendorf, Steimle & Becker

(57) **Abstract**

A user verification system and method for use in a multimedia-capable network wherein access to controlled facilities such as, e.g, corporate or enterprise networks, home networks, physical locations, access-controlled services, and the like, is verified using multimedia response criteria. When an indication signifying that a user is attempting to access the controlled facility is received in a network element, a multimedia session engine is invoked for launching an access service application. Responsive to an interrogation procedure, multimedia responses associated with the user are captured and verified against a stored access control profile. Access to the controlled facility is granted only when the responses are validated.

## Description

### BACKGROUND OF THE INVENTION

### Technical Field of the Invention

The present invention generally relates to telecommunication and data communication services. More particularly, and not by way of any limitation, the present invention is directed to a user verification service in a multimedia-capable next-generation network.

### Description of Related Art

Over the last two decades or so, telecommunication services have evolved rapidly from simple telephone calls and fax communications to a host of advanced services such as multi-party conferences, voice mail, call forwarding, caller ID, call waiting, et cetera. This rapid evolution has been made possible primarily due to the successful deployment of the Intelligent Network (IN) and Advanced IN (AIN) architecture using Signaling System No. 7 (SS7) as the out-of-band signaling protocol infrastructure. Similarly, data services have also followed a significant transformation from basic text messaging in the 1980s to the World Wide Web and Internet of today, where transporting diverse media has become commonplace. For example, bandwidth-intensive services such as desktop video conferencing, video on demand, telemedicine, realtime audio, and many other applications are driving the demand for simultaneous support of different types of services on the same public network.

Coupled with the phenomenal popularity of the Internet, recently there has been a tremendous interest in using the packet-switched network (PSN) infrastructure employed in the data networks (e.g., those based on Internet Protocol (IP) addressing) as a replacement for, and/or as an adjunct to, the existing circuit-switched network (CSN) infrastructure deployed in today's voice networks. Several advantages are expected to be realized due to such integration. From network operators' viewpoint, the inherent traffic aggregation in PSN allows for a reduction in the cost of transmission and the infrastructure cost per end-user. Ultimately, such cost reductions enable the network operators to pass on the savings to subscribers or, more generally, users. Also, operators of a new breed of service-centric networks (referred to as next-generation networks, distinct from the existing voice-centric and data-centric networks) can offer enhanced services with integrated voice/data/video to users who will be using endpoints of diverse multimedia capabilities.

As alluded to hereinabove, several advances have taken place in both data and voice services. However, the current data-centric and voice-centric services do not provide the gamut of enhancements that are possible with the use of multimedia capabilities in a next-generation network.

### SUMMARY OF THE INVENTION

Accordingly, the present invention advantageously provides a user verification scheme for use as a network-based service in a multimedia-capable network wherein access to controlled facilities such as, e.g, corporate or enterprise networks, home networks, physical locations (residential or commercial), access-controlled services, and the like, is verified using multimedia response criteria. Preferably, the multimedia-capable network is provisioned as a next-generation network (referred to as a service network) having a decoupled service architecture that is facilitated by the use of multimedia softswitch technology.

In one aspect, the present invention is directed to an access control method for verifying a remote user's access to a controlled facility. When an indication signifying that the user (operating a multimedia appliance) is attempting to access the controlled facility is received in a network element, a multimedia call/session engine is invoked for launching an access service application. Depending on how the service architecture is implemented, the access application may be provisioned as a service application hosted on a third-party server platform coupled to a public packet-switched network (e.g., the Internet), as a telecom-hardened, carrier-class service application hosted on dedicated IN/AIN-compliant nodes such as multimedia Service Control Points (SCPs) and application servers, or as a centralized service with service logic embedded in SS7 nodes (e.g., Service Switching Points or SSPs) and multimedia softswitch elements.

The access service application is operable to interrogate the user, either in an active manner, passive manner, or in any combination thereof, for multimedia responses. In an exemplary embodiment, the multimedia responses comprise live video capture of the user operating the multimedia access appliance for gaining entry to the controlled facility, which may be formed of a private corporate or home network, an enterprise intranet, or a public data network, a physical location, and the like.

The multimedia responses from the user are verified by determining whether they match valid users' access profile information stored for the particular network being accessed. If so, permission to access the controlled facility is granted to the user. In an exemplary embodiment, additional interrogation steps may be effectuated after the user has been granted access to the network. Such additional interrogation procedures may be automated as part of the access service application service or facilitated by a human security operator. Continued user validation is accordingly required in this exemplary implementation for maintaining the original grant of access.

In another aspect, the present invention is directed to a computer-accessible medium operable with a network element disposed in a multimedia-capable next-generation network. The computer-accessible medium is further operable to carry a sequence of instructions which, when executed by at least one processing entity associated with the network, cause the network element to perform at least a portion of the steps of the user verification method set forth hereinabove.

In yet another aspect, the present invention is directed to an access control system for use with a multimedia-capable next-generation network so as to provide remote access to users with respect to a network portion such as, e.g., a private network portion. The access control system includes a structure capable of receiving indications from a remotely located user, wherein the indications are operable to signify to a network element that the user is attempting to gain access to the network portion by means of a multimedia appliance. Associated with the network element is a multimedia session engine operable to invoke a network access application, in response at least in part to the received indications, on an access application server disposed in the multimedia-capable network. An interrogating apparatus, operable in a passive mode, active mode, or in a combination, is operable in association with the multimedia appliance to capture, receive, acquire, or collect one or more multimedia responses (e.g., live picture ID, speech samples, etc.) from the user. A suitable logic block associated with the access application server is operable, in conjunction with a database, to determine if the multimedia responses from the user are valid. Permission to access the network portion is granted only if the responses associated with the remotely located user are matched with a stored access control profile for the user.

### BRIEF DESCRIPTION OF THE DRAWINGS

A more complete understanding of the present invention may be had by reference to the following Detailed Description when taken in conjunction with the accompanying drawings wherein:
FIG. 1 depicts an exemplary high-level architectural scheme of a next-generation, multimedia-capable network employed for practicing the teachings of the present invention;
FIG. 2 depicts a functional block diagram associated with the exemplary high-level architectural scheme shown in FIG. 1;
FIG. 3 depicts a functional block diagram of a multimedia call/session engine operable in accordance with the teachings of the present invention;
FIG. 4 depicts an exemplary next-generation network capable of multimedia services;
FIG. 5 depicts an exemplary network which employs a multimedia user verification scheme in accordance with the teachings of the present invention; and
FIGS. 6A and 6B are flow charts of the various steps involved in the multimedia user verification method provided in accordance with the teachings of the present invention for controlling access to a controlled facility.

### DETAILED DESCRIPTION OF THE DRAWINGS

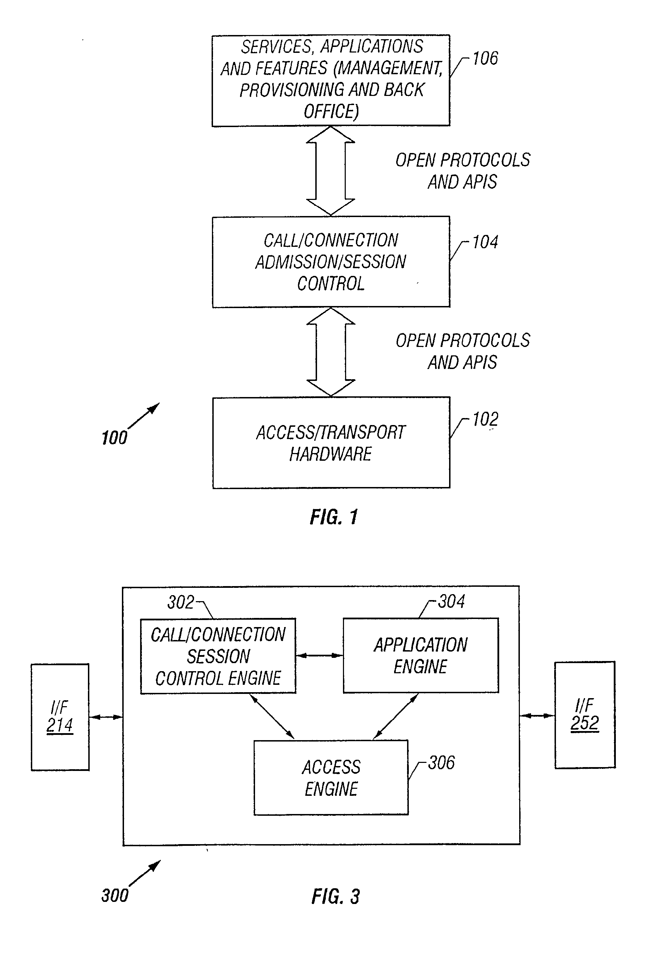

In the drawings, like or similar elements are designated with identical reference numerals throughout the several views thereof, and the various elements depicted are not necessarily drawn to scale. Referring now to FIG. 1, depicted therein is an exemplary high-level architectural scheme 100 of a next-generation network that is capable of effectuating multimedia communications. In the context of the present patent application, the term "multimedia" broadly refers to visual information, aural information, and other information. Visual information is generally divided into two categories: (i) still pictures and graphics, and (ii) full-motion video or animation. Aural information includes both speech and non-speech categories. Other information categories can include text, computer data, etc. Multimedia communication involves, accordingly, integrated presentation of text, graphics, video, animation, sound, and the like, using different media and multiple information elements in a single application or session.

The exemplary architectural scheme 100 of the next-generation network is preferably effectuated by implementing what is known as softswitch technology. Essentially, the softswitch functionality is operable to separate the call control functions of a call (or, "session control" functions in the context of a multimedia communication session) from the media gateways (i.e., transport layer(s)) that carry it. Call control features can vary, but call routing, admission control, connection control (such as creating and tearing down sessions), and signaling interworking -- such as from SS7 to Session Initiation Protocol (SIP) -- are usually included. These functionalities may collectively be referred to as session control. The softswitch functionality can also include: (i) the ability to route a call based on customer database information, (ii) the ability to transfer control of the call to a node disposed in another network, and (iii) support of management functions such as provisioning, billing, etc.

Continuing to refer to FIG. 1, the architectural scheme 100 accordingly includes an access/transport level 102 which interacts with a session control level 104 via a plurality of open-standard protocols and application programming interfaces (APIs). The session control level 104 is operable, in turn, to interface with an application services/features level 106 via a second set of open-standard protocols and APIs. As will be described in greater detail hereinbelow, various multimedia services, applications, and features may be provided as part of this services level 106. Also, some of the back office management and provisioning functionality can be included herewith.

Those skilled in the art should readily appreciate that several protocols and APIs are available for effectuating the architectural scheme 100 set forth hereinabove, which effectively decouples the session control layer from the underlying access/transport layer as well as the service application layer. For example, these protocols -- which effectuate media control APIs, signaling APIs, and service APIs -- include: SIP, H.323, Call Processing Language (CPL), Media Gateway Controller Protocol (MGCP), Internet Protocol Device Control (IPDC), H.248, MEGACO, Real-Time Protocol (RTP), Java™ APIs for Integrated Networks (JAIN), Resource Reservation Protocol (RSVP), Parlay, Lightweight Directory Access Protocol (LDAP), Markup Languages such as Extensible Markup Language (XML), Multi Protocol Label Switching (MPLS), and the like. Additionally, access to the existing IN/AIN service architecture is also available via suitable SS7 or IP-based interfaces.

The softswitch functionality is realized essentially as a software implementation that can reside on a single network element, or be distributed across multiple nodes. Also, different levels of decoupling and interfacing may be provided in an actual softswitch implementation. For example, SS7 functionality may be embedded within a softswitch element or kept separate. In other implementations, the softswitch functionality may sit on top of a media gateway (MGW), instead of being physically distinct, as long as transport and control planes are decoupled.

By creating separate planes for control and switching and leveraging software's programmability, service providers can combine transport services and control protocols freely in order to facilitate seamless migration from one service to another. Best-in-class solutions and products from multiple vendors can be advantageously deployed in the next-generation network because of open standards and APIs. Further, open APIs to the service layer (including a suitable service creation environment (SCE)), along with service creation, service mediation and service brokering standards, enable creation of numerous advanced, multimedia-enhanced services with faster service rollout.

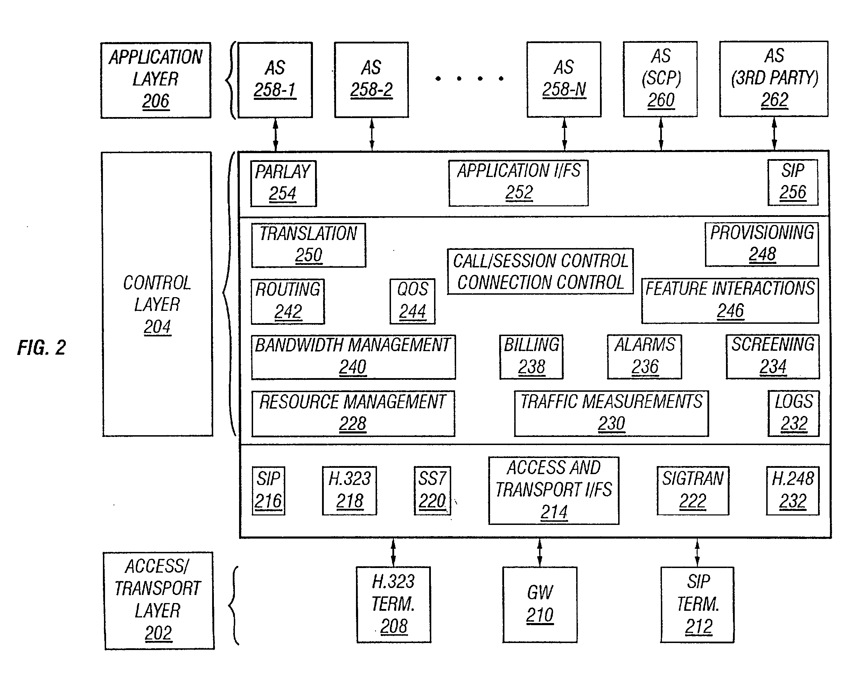

FIG. 2 depicts a functional block diagram associated with the exemplary architectural scheme shown in FIG. 1. Three layers corresponding to the three decoupled levels of the architectural scheme are particularly illustrated. An access/transport layer 202 is exemplified with a plurality of multimedia-capable H.323 terminals 208, GWs 210 (including MGWs and Access Gateways or AGWs) for providing access to one or more Integrated Access Devices (IADs) (not shown) and other communication appliances, and multimedia-capable SIP terminals 212. For purposes of the present invention, all such multimedia-capable access devices (including multimedia-capable phones, computers, game stations, television sets, etc.) may be referred to as multimedia appliances and are preferably provided with one or more man/machine interfaces (e.g., video/still cameras, microphones, display screens, keyboards, pointing devices, joy sticks, track balls, voice recorders, audio-to-text or text-to-audio converters, and the like) for accepting or capturing multimedia responses or inputs associated with a user. Also, in some exemplary implementations, the multimedia appliances may be equipped with suitable biometric ID readers and sensors, e.g., fingerprint readers, retinal scanners, voice recognition systems, etc.

Continuing to refer to FIG. 2, control layer 204 of the decoupled architectural scheme illustrates the functionality of an exemplary multimedia call/session engine implemented as part of a multimedia softswitch in a network. A call/session and connection control block 226 is provided with a plurality of access and transport interfaces 214 to couple to the underlying access/transport layer 202. As alluded to hereinabove, these interfaces include, e.g., SIP interfaces 216, H.323 interfaces 218, SS7 interfaces 220, SigTran interfaces 222 (for SS7-over-IP) and H.248 interfaces 224. The functionality of the call/session and connection control block 226 is associated with a plurality of modules such as, for instance, a resource management module 228, a traffic metering/measurement module 230, an event log module 232, a screening module 234, alarms 236, a billing module 238, a bandwidth management module 240, a routing module 242, a Quality of Service (QoS) module 244, feature interactions module 246, a provisioning module 248, and a translation module 250.

A plurality of application interfaces 252 are available to the multimedia session engine for interacting with an application layer 206. A Parlay interface 254 and a SIP interface 256 are exemplified herein. Reference numerals 258-1 through 258-N refer to a plurality of application servers (ASs) that are operable to host various services, features and management policies. One or more legacy service nodes (e.g., a Service Control Point or SCP) may also be provided as part of the application layer 206 in the form of one or several AS nodes, e.g., AS 260. Preferably, interfaces to third-party AS nodes 262 are also included.

Application layering in the decoupled architectural scheme can be architected in three ways. Custom applications such as e-commerce, e-business, e-residence (home appliance control, residential security, etc.), e-health, and the like, may reside on the Internet as applications hosted on third-party platforms. Specialized services such as Virtual Private Networks (VPNs), prepaid services, etc., and multimedia applications for business and residential use may be provided as distributed applications hosted on dedicated telecom-hardened platforms. Carrier-class AS nodes, multimedia-capable SCPs, etc. typically comprise such platforms. A select group of legacy service offerings, for commercial as well as residential applications, may be provided as centralized applications that are based on SS7 platforms (such as signal switching points (SSPs)) and softswitch nodes.

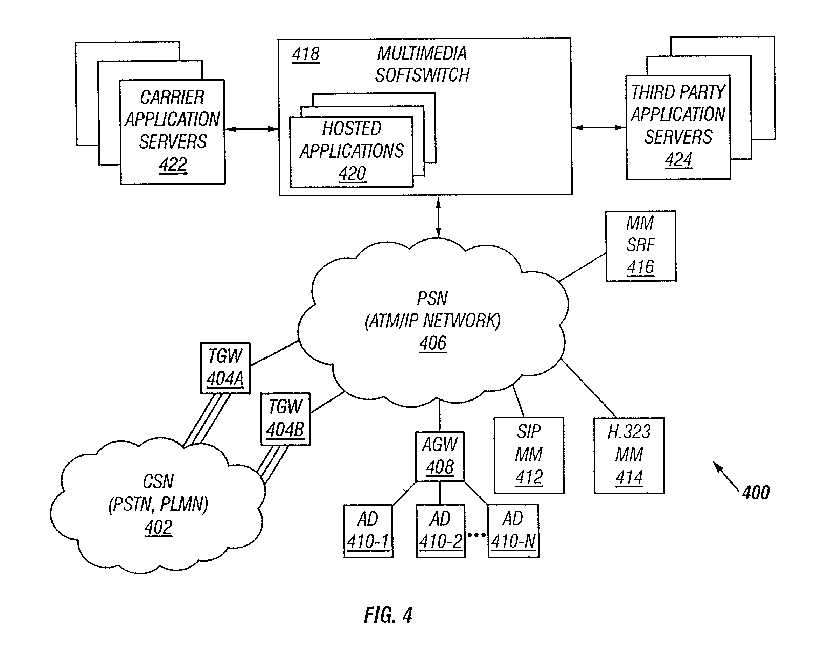

Referring now to FIG. 3, depicted therein is a high-level functional block diagram of a call/session engine 300 of a multimedia softswitch operable in accordance with the teachings of the present invention. As described in detail hereinabove, both access/transport interfaces 214 and application layer interfaces 252 are available to the call/session engine 300 for effectuating its softswitch functionality. A control engine 302 is responsible for call/session control and connection control (analogous to the traditional call control function or CCF). An application engine 304 is included for application triggering and managing feature/policy interaction with respect to a triggered service application. In addition, the application engine 304 is preferably operable to open suitable APIs for supporting enhanced services. When third-party applications are invoked, the application engine 304 may also provide firewall management and subscriber access management for service selection and initiation. An access engine 306 is operable to effectuate online user authentication and authorization and validate service usage rights. Also, roaming management may be provided by the access engine 306 for subscription retrieval, roaming retrieval and registration negotiation.

FIG. 4 depicts an exemplary next-generation multimedia network 400 that is capable of providing a plurality of multimedia services in accordance with the teachings of the present invention. For purposes of the present invention, network 400 and its variants and exemplary implementations will be referred to as a "service network." One or more legacy circuit-switched networks (CSNs) 402 such as the Public Switched Telephone Network (PSTN) for wireline telephony and the Public Land Mobile Network (PLMN) for wireless telephony are coupled to one or more packet-switched networks (PSNs) 406 such as the IP-based Internet, ATM-based packet network, etc. Further, the PSN portion 406 may also encompass such other private IP-based networks as, e.g., corporate intranets, enterprise networks, home networks, and the like. Accordingly, in one embodiment, PSN 406 represents an inter-networking network of a combination of such IP networks. A plurality of Trunk Gateways (TGWs), e.g., TGW 404A and TGW 404B, are disposed between the CSN and PSN portions of the network 400 for effectuating the interfacing therebetween. An Access Gateway (AGW) node 408 is coupled to the PSN portion 406 for facilitating access to the network from a plurality of access devices (ADs) 410-1 through 410-N. One or more multimedia-capable SIP terminals 412 and multimedia-capable H.323 terminals 414 are operable to originate and terminate multimedia sessions in conjunction with various multimedia services supported by the network 400.

One or more optional multimedia (MM) Service Resource Function (SRF) nodes, e.g., MM-SRF 416, are coupled to PSN 400 for providing bearer resource functionality for converged voice/data services, protocols to request these services, and open APIs for programming bearer-resource-intensive applications as well as content/announcement files. The MM-SRF node 416 does not set up a bearer path between two parties, however, as there is no such dedicated bearer connection in the context of IP networking. Rather, only a logical connection is established between the parties.

Within the multimedia-based service network framework, some of the functions of the MM-SRF node 416 include the following: (i) operating in the media access/resources plane for bearer services by providing multimedia resource services, (ii) providing standard protocols, (iii) interfacing to AS nodes through a multimedia softswitch (e.g., softswitch 418), and (iv) enabling third-party programmability of bearer services and content/announcements through the open APIs. Those skilled in the art should appreciate that some of these functionalities may be embedded within the multimedia softswitch 418 or be distributed across several MM-capable nodes depending on the integration level of the softswitch.

A plurality of hosted applications 420 are colocated at the multimedia softswitch node 418. The specific type of the applications is dependent on the service architecture implementation and application layering. Some of the exemplary applications may include network announcements (in conjunction with SRF 416), video conferencing, digit collection, unified (multimedia) messaging, media streaming and custom announcements, automatic speech recognition (ASR), text-to-speech (TTS), user verification using multimedia, and various enhanced services such as multimedia call waiting, direct connect services, distinctive call notification, emergency override service, presentation of call party profiles based on multimedia, etc. It should be recognized, in addition, that some of these multimedia services may be provisioned as applications hosted on carrier AS nodes 422 and third-party AS nodes 424, with suitable APIs associated therewith, respectively.

Although the exemplary network embodiment 400 shown in FIG. 4 does not explicitly illustrate SS7 interfaces for effectuating legacy IN/AIN services, those skilled in the art should appreciate that various such SS7 interfaces and SS7-capable signaling gateways (SGWs) may also be appropriately disposed in the network for providing SS7 functionality.

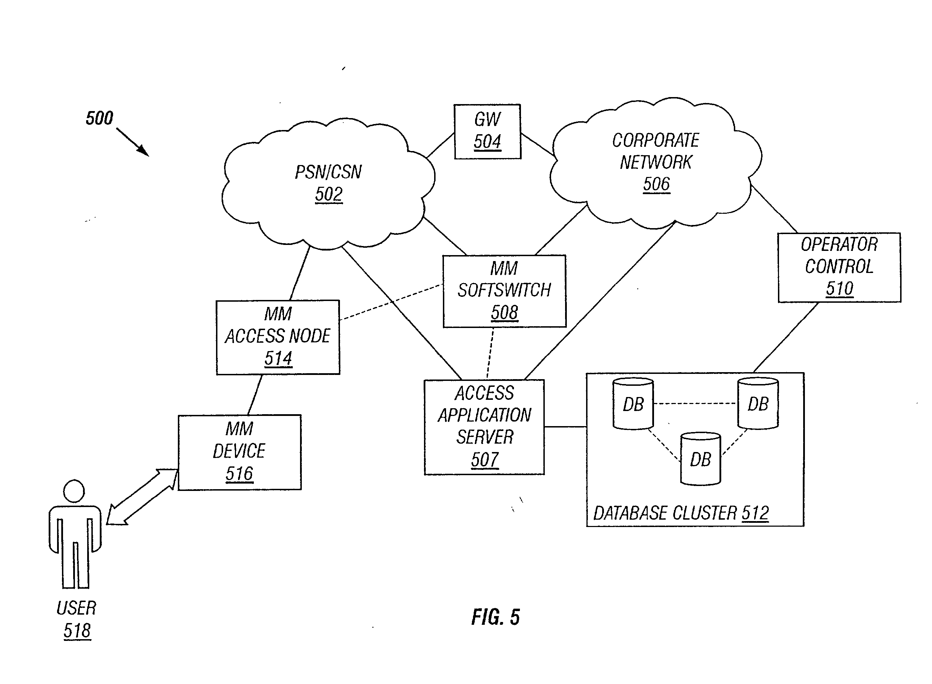

Referring now to FIG. 5, depicted therein is an exemplary service network arrangement 500 which employs a multimedia user verification scheme in accordance with the teachings of the present invention for purposes of positively identifying a user 518 (or, interchangeably, a subscriber) attempting to gain access to a controlled facility such as, e.g., a corporate network 506. A PSN/CSN portion 502 (hereinafter referred to as a public network portion) is coupled to the corporate network 506 via a suitable GW node 504. A multimedia softswitch 508 is interfaced with either the public network portion 502, the corporate network 506, or both.

In the exemplary embodiment of the user verification system shown in FIG. 5, an access application server node 507 is operable to provide a multimedia-based access control service with respect to user 518 attempting to access the corporate network portion 506. The access application server node 507 may be interfaced with either the public network portion 502, the corporate network 506, or both. Further, the multimedia softswitch 508 is operable to launch a multimedia network access application hosted on the access application server 507 when a multimedia session engine is invoked due to access attempts by the user 518 (e.g., an employee), who may be remotely located, through a multimedia-capable appliance/device 516.

Preferably, one or more multimedia man/machine interfaces (e.g., a video/still camera, a keyboard or pointing device, an audio interface, and the like) are colocated with the multimedia appliance 516 for use within the context of the present invention. A multimedia access node 514 is operably coupled to the public network portion 502 to provide access gateway functionality with respect to the multimedia appliance 516. Further, the access node 514 is also interfaced with the multimedia softswitch 508.

A database cluster 512 having a plurality of databases is operable for storing access profile information for valid users of the corporate network 506. Such access profile information may comprise valid users' video clips, still photos, audio responses (e.g., words or phrases) to a set of questions that can be randomly selected, biometric ID information such as fingerprints, retinal scans, and the like, in addition to password and login ID information. The database cluster 512 is interfaced with the network access AS node 507 as well as an operator control 510 associated with the corporate network. Preferably, the operator control 510 can override an automated interrogation procedure or manually interject an interrogation procedure whenever necessary.

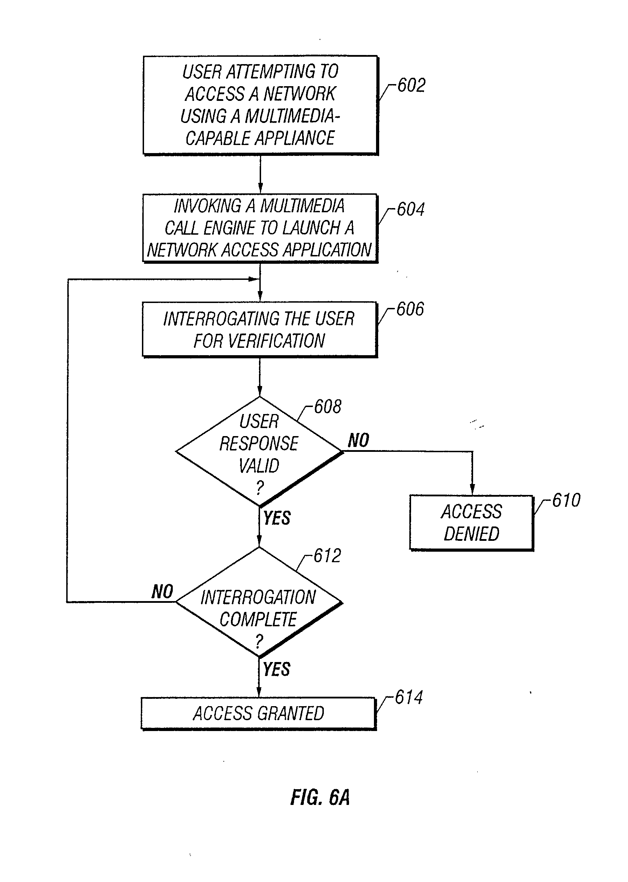

FIG. 6A is a flow chart of the various steps involved in an exemplary multimedia user verification method provided in accordance with the teachings of the present invention for controlling access to a private network portion such as, e.g., a corporate network or a home network. When the user attempts to access the private network by logging from a remotely located multimedia appliance, an indication thereof is received in a network element such as the multimedia softswitch operably coupled to the network (step 602). Responsive thereto, a multimedia call/session engine is invoked to launch a network access application (step 604), which may be a softswitch-hosted application (centralized application layering), an application hosted on a dedicated telecom-hardened AS node as a carrier-class service (distributed application layering), or as a third-party application on the Internet.

Regardless of its location, the network access application is operable to "interrogate" the user by means of a suitable multimedia man/machine interface (step 606). The interrogation process and responses to such interrogation may be passive, active, or a combination thereof. For example, a video camera associated with the multimedia appliance can passively "interrogate" and automatically capture a live picture of the user, which can be verified against the valid users' access profile information stored in a database. In another embodiment, an audio query system coupled with ASR may be employed to actively query the user for audio response input. Again, the audio responses are verified against the stored access profile information for the private network. In yet another embodiment, the user may be instructed by an audio system to present a token, an access card having a predetermined graphic element or other ID indicia thereon, or a picture ID, etc. for verification. It should be appreciated, accordingly, that numerous multimedia interrogation schemes may be implemented by utilizing the various combinations resulting from audio, video, text, biometric inputs. However, actual implementations will necessarily depend on network-specific access profile information that is available in the database storage.

Continuing to refer to FIG. 6A, upon receiving a suitable multimedia response (which may be an active input by the user or a passive capture), either at a multimedia softswitch or a node hosting the network access application, a decision block 608 determines whether the response is a valid response by verifying it against the stored access profile information database. If it is determined that the multimedia response is not a valid response, the user is denied access to the private network (step 610). The interrogation procedure may employ a predetermined cascaded scheme wherein additional interrogation steps or loops may be incorporated such that multiple levels of access may be granted depending upon the levels of security, permissions, authorization schemes, etc. associated with the private network. Also, the interrogation procedure may be a recursive process, wherein a sequence of queries are employed, each of which requiring a valid response. Subsequently, when the interrogation procedure is successfully completed (decision block 612), the user is granted access to the private network (step 614).

It should be recognized that in some exemplary embodiments of the present invention, the step of granting access or permission may also be associated with user authorization and user authentication procedures. In such implementations, verification, authorization and authentication steps must be carried out before access to the private network is gained.

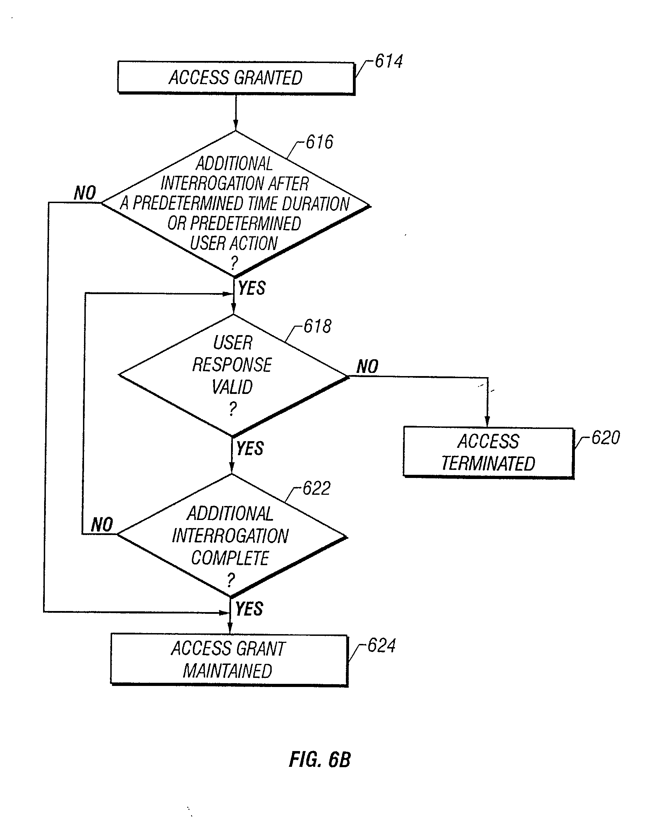

FIG. 6B is another flow chart of the various steps that may be provided in addition to the exemplary multimedia user verification method described hereinabove. Upon granting permission to the user with respect to accessing the private network (step 614), additional interrogation may be carried out after a predetermined time has elapsed since gaining access. Or, in some other implementations, additional interrogation may be effectuated after a predetermined user "action" has taken place (which can include no action) since gaining entry. A decision block 616 determines if such additional interrogation (which also can be passive, active, or a combination thereof) is to take place. In one exemplary embodiment, the network access application is operable to carry out additional interrogation procedures for ensuring continued network security. In another exemplary embodiment, operator control may override the network access application and institute manual interrogation procedures such as, e.g., a human operator querying the user for certain multimedia responses. Preferably, the operator control facility is interfaced with the access profile information databases such that user verification process can be quickly and reliably accomplished.

If no additional interrogation procedures are to be taken, access is maintained (step 624). On the other hand, when additional interrogation steps are instituted, either automatically or manually, user responses are verified as set forth hereinabove. If the responses are not valid (decision block 618), access is terminated (step 620). User response verification preferably takes place until the additional interrogation steps are successfully completed (decision block 622).

Based upon the foregoing Detailed Description, it should be readily apparent that the present invention provides an enhanced user verification service using multimedia within the context of a next-generation network. By architecting the service as part of a decoupled application layer with open protocols and APIs, not only can service interoperability with different network elements and platforms be ensured, but service rollout can be streamlined for faster delivery. Furthermore, the robust access control system of the present invention advantageously overcomes the shortcomings and deficiencies of the conventional solutions by obviating the need for "secret" codes, passwords, login IDs, secure keys, and the like, all of which are prone to theft, misappropriation, accidental loss, etc. In addition, unambiguous positive identification of users gaining access to controlled areas is accomplished.

It is believed that the operation and construction of the present invention will be apparent from the foregoing Detailed Description. While the system and method shown and described have been characterized as being preferred, it should be readily understood that various changes and modifications could be made therein without departing from the scope of the present invention as set forth in the following claims. For example, although an MM-based identification scheme in the context of a private network portion has been particularly exemplified in the present patent application, the teachings of the present invention can also be utilized advantageously as a network-based verification service for controlling access to a plurality of controlled facilities such as buildings, residences, commercial facilities, and other physical plants, and authorized services. Thus, it is helpful to conceptualize the controlled facilities within the grasp of the present invention to be comprised of: (i) physical locations such as a building or user's home; (i) services such as banking, check cashing, e-commerce, subscriber profile updating, controlled services, and the like; and (iii) a network (corporate, public, etc).

Since users/subscribers have certain unique characteristics, they can be used for various access privileges (banking, home security, corporate security, etc.). Further, a significant advantage of the present invention is that these user characteristics can be stored on the service network once and be used for multiple purposes. As a consequence, user verification and authentication can be a dedicated service offered on the public network for private use as described hereinabove. For instance, in the context of home security, entry may be based on an authorized party profile including homeowner(s), family members, maids, etc. Selective restriction may accordingly be applied for different areas of the home (e.g., maids vs. owner).

In some implementations, information that need not be supplied via user responses can be queried at appropriate times and when no response is given, such "no response" action may be considered a valid user "action" for purposes of interrogation. Such user "actions" can be utilized in conjunction with other active responses for positive identification. As an added variation, some user response parameters can be mandatory while others are optional, which may be selected on a dynamic basis by the verification system based on certain conditions, e.g., user remaining idle for a period of time, frequent login attempts within a time frame, etc.

Also, those skilled in the art should appreciate upon reference hereto that the procedure for capturing appropriate multimedia responses is amenable to numerous variations depending upon the capabilities of individual multimedia appliances deployed. As the functionality of these devices continues to evolve, additional access control criteria and related features or policies can be added to the stored access control profiles. The present invention can therefore enhance network security by specifying different types of verification for different levels of access to the network. In addition, as alluded to in the foregoing, the user verification scheme of the present invention can be advantageously deployed for controlling access to certain services on a public telecommunications network (e.g., wireless and wireline telephony networks) or a data communications network such as the Internet. Accordingly, all such modifications, alterations, combinations, amendments, and the like should be deemed to be within the ambit of the present invention whose scope is defined solely by the claims set forth immediately hereinbelow.

## Claims

1. An access control method for verifying a user's access to a network, comprising the steps:
upon receiving an indication signifying that said user is attempting to access said network using a multimedia appliance, invoking a multimedia session engine to launch a network access application;
interrogating said user by an access application server associated with said network;
receiving a multimedia response from said user responsive to said interrogating step;
determining if said multimedia response is valid; and
if so, granting permission to said user with respect to accessing said network.

2. The access control method for verifying a user's access to a network as set forth in claim 1, wherein said user is remotely located with respect to said network.

3. The access control method for verifying a user's access to a network as set forth in claim 2, wherein said multimedia response from said user comprises an audio response responsive to said interrogating step.

4. The access control method for verifying a user's access to a network as set forth in claim 2, wherein said multimedia response comprises a video input of said user in response to said interrogating step.

5. The access control method for verifying a user's access to a network as set forth in claim 4, wherein said video input comprises a live picture of said user.

6. The access control method for verifying a user's access to a network as set forth in claim 2, further comprising the steps:
upon granting permission to said user with respect to accessing said network, re-interrogating said user after a time period;
receiving a response from said user responsive to said re-interrogating step; and
if said response from said user not valid, terminating said user's access to said network.

7. The access control method for verifying a user's access to a network as set forth in claim 6, wherein said response from said user comprises at least one of an audio response, a video input, a device input effectuated via said multimedia appliance, and a biometric ID input of said user.

8. The access control method for verifying a user's access to a network as set forth in claim 7, wherein said network comprises a corporate computer network, and further wherein said re-interrogating step is effectuated by a human operator associated with said corporate computer network.

9. The access control method for verifying a user's access to a network as set forth in claim 7, wherein said network comprises a corporate computer network, and further wherein said re-interrogating step is effectuated by an automated access control apparatus associated with said corporate computer network.

10. The access control method for verifying a user's access to a network as set forth in claim 7, wherein said network comprises a home network, and further wherein said re-interrogating step is effectuated by an access control application server associated with a public network that serves said user.

11. An access control system for use with a multimedia-capable next-generation network, said system for providing remote access to a network portion, comprising:
means for receiving an indication signifying that a remotely located user is attempting to access said network portion using a multimedia appliance;
a multimedia session engine operable to invoke a network access application, responsive to said indication, on an access application server associated with said multimedia-capable next-generation network;
means for interrogating said remotely located user for a multimedia response, said means for interrogating operating responsive to control inputs provided by said multimedia session engine;
logic means, associated with said access application server, for determining if said multimedia response form said user is valid; and
means for granting permission to said user with respect to accessing said network portion, provided said multimedia response has been determined to be valid.

12. The access control system for use with a multimedia-capable next-generation network as set forth in claim 11, wherein said network portion comprises a network selected from the group consisting of a corporate network, a home network, a small business network, and a private enterprise network.

13. The access control system for use with a multimedia-capable next-generation network as set forth in claim 12, wherein said multimedia response comprises at least one of an audio response, a video input, a device input effectuated via said multimedia appliance, and a biometric ID input of said user.

14. The access control system for use with a multimedia-capable next-generation network as set forth in claim 13, further including means for re-interrogating said remotely located user after a select time period upon granting permission to access said network portion.

15. The access control system for use with a multimedia-capable next-generation network as set forth in claim 13, wherein said means for interrogating said remotely located user includes means for effectuating different levels of interrogation depending upon a plurality of access levels allowed with respect to said network portion.

16. A computer-accessible medium operable with a network element disposed in a multimedia-capable next-generation network, said computer-accessible medium carrying a sequence of instructions which, when executed by at least one processing entity associated with said multimedia-capable next-generation network, cause said network element to perform the following steps:
upon receiving an indication signifying that a user is attempting to access a network portion using a multimedia appliance, invoking a multimedia session engine to launch a network access application;
directing an access application server associated with said multimedia-capable next-generation network to interrogate said user;
receiving a multimedia response from said user responsive to said interrogating step;
determining, in said access application server, if said multimedia response is valid; and
if so, granting permission to said user with respect to accessing said network portion.

17. The computer-accessible medium operable with a network element disposed in a multimedia-capable next-generation network as set forth in claim 16, wherein said network portion comprises a network selected from the group consisting of a corporate network, a home network, a small business network, and a private enterprise network.

18. The computer-accessible medium operable with a network element disposed in a multimedia-capable next-generation network as set forth in claim 17, wherein said user is remotely located with respect to said network portion.

19. The computer-accessible medium operable with a network element disposed in a multimedia-capable next-generation network as set forth in claim 18, wherein said multimedia response comprises at least one of an audio response, a video input, a device input effectuated via said multimedia appliance, and a biometric ID input of said user.

20. The computer-accessible medium operable with a network element disposed in a multimedia-capable next-generation network as set forth in claim 19, wherein said sequence of instructions further includes instructions to carry out the following steps:
upon granting permission to said user with respect to accessing said network portion, re-interrogating said user after a time period;
receiving a response from said user responsive to said re-interrogating step; and
if said response from said user not valid, terminating said user's access to said network portion.

21. A user verification method for use in a service network for positively identifying a user attempting to gain access to a controlled facility, comprising the steps of:
upon receiving an indication that said user is attempting to access said controlled facility, invoking a multimedia session engine to launch an access service application;
interrogating said user by an access application server associated with said service network;
receiving a multimedia response from said user responsive to said interrogating step;
determining if said multimedia response is valid; and
if so, granting permission to said user with respect to accessing said controlled facility in accordance with a user access profile stored on said service network.

22. The user verification method for use in a service network for positively identifying a user attempting to gain access to a controlled facility as set forth in claim 21, wherein said multimedia response from said user comprises at least one of an audio response, video response, and a text response, and further wherein said controlled facility is selected from the group consisting of a corporate network, a home network, a physical area, and an access-controlled service.

23. The user verification method for use in a service network for positively identifying a user attempting to gain access to a controlled facility as set forth in claim 22, further comprising the steps:
upon granting permission to said user with respect to accessing said controlled facility, re-interrogating said user after at least one of a predetermined time period and a predetermined user action;
receiving a response from said user responsive to said re-interrogating step; and
if said response from said user not valid, terminating said user's access to said controlled facility.

24. The user verification method for use in a service network for positively identifying a user attempting to gain access to a controlled facility as set forth in claim 22, wherein said audio response comprises playing back on a multimedia appliance a stored audio file associated with said user.

25. The user verification method for use in a service network for positively identifying a user attempting to gain access to a controlled facility as set forth in claim 22, wherein said audio response comprises generating a live audio file associated with said user on a multimedia appliance.

26. The user verification method for use in a service network for positively identifying a user attempting to gain access to a controlled facility as set forth in claim 22, wherein said video response comprises playing back on a multimedia appliance a stored video file associated with said user.

27. The user verification method for use in a service network for positively identifying a user attempting to gain access to a controlled facility as set forth in claim 22, wherein said video response comprises generating a live video file associated with said user on a multimedia appliance.

28. The user verification method for use in a service network for positively identifying a user attempting to gain access to a controlled facility as set forth in claim 22, wherein said multimedia response further includes providing a still photograph of said user.
